# DEMANDE DE BREVET EUROPEEN

(11) **EP 1 688 553 A1**
(43) Date de publication de la demande: **09.08.2006**
(21) Numéro de dépôt: 06352002.7
(22) Date de dépôt: 08.02.2006
(51) Int. Cl.: E04C 2/26, B32B 13/00

(54) **Plaque de parement réalisant une isolation acoustique**

(30) Priorité: 08.02.2005 FR 0501242
(71) Demandeur: PLACOPLATRE, 92150 Suresnes (FR)
(72) Inventeur: Harmel, Stéphane, 59520 Marquette les Lille (FR); Ozouf, Pascal, 77420 Champs sur Marne (FR)
(74) Mandataire: Hartmann, Jean-Luc

(57) **Abrégé**

Cette plaque est destinée notamment à la réalisation de cloisons, de doublages et/ou de plafonds.

Elle présente :
- une plaque de base (10) constituée d'une plaque de plâtre avec deux faces opposées,
- un panneau (12) d'épaisseur inférieure à celle de la plaque de base (10) collé sur une face de ladite plaque (10) à l'aide d'un adhésif souple après séchage.

## Description

La présente invention concerne une plaque de parement à base de plâtre présentant des propriétés d'isolation acoustiques renforcées. Une plaque de plâtre est une plaque composite comportant une couche principale centrale en plâtre prise en sandwich entre deux couches d'épaisseur moindre en carton. De telles plaques sont utilisées par exemple pour réaliser des parois, des cloisons, des plafonds, des doublages, etc....

L'invention concerne notamment la réalisation de cloisons. Il est connu, pour réaliser une cloison de mettre en place une ossature à base de profilés métalliques fixés sur un sol, un plafond et des murs latéraux porteurs, ainsi que des profilés métalliques verticaux emboîtés dans les profilés au sol et au plafond et disposés à entraxe régulier, puis de venir visser sur cette ossature des plaques de plâtre, de chaque côté de cette ossature. L'espace laissé libre entre les plaques de parement peut être rempli d'un matériau absorbant tel de la laine de verre ou de la laine de roche.

Le problème technique à l'origine de l'invention est d'améliorer l'isolation acoustique d'une telle cloison. Il a déjà été proposé, pour améliorer cette isolation acoustique, d'utiliser des profilés d'un dessin particulier ayant pour but de mieux désolidariser acoustiquement les deux couches de plaques de plâtre. Ces solutions ne permettent pas de réaliser une bonne isolation acoustique lorsque des performances élevées d'isolation sont demandées. C'est ainsi par exemple le cas pour réaliser des cloisons dans un hôpital.

Dans le domaine de l'isolation thermique, il est également connu de coller sur une face de la plaque de plâtre une couche de polystyrène expansé à l'aide d'une colle polyuréthane. La couche de polystyrène expansé est d'une épaisseur relativement importante (plusieurs centimètres) et ne convient donc pas pour la réalisation de nombreuses cloisons. Un tel panneau associant une plaque de plâtre avec du polystyrène expansé ne présente pas non plus de caractéristiques d'amortissement acoustique particulières.

La présente invention a alors pour but de fournir les moyens permettant d'augmenter l'isolation acoustique d'une cloison réalisée à l'aide de plaques de plâtre. Avantageusement, la solution proposée n'augmentera pas l'épaisseur totale de la cloison afin de limiter l'emprise de la cloison sur le sol et de préserver l'espace habitable. Elle sera également de préférence facile à mettre en oeuvre et présentera un surcoût peu élevé par rapport à une cloison classique. Enfin, cette cloison devra présenter une bonne stabilité de forme, c'est-à-dire ne pas se déformer dans le temps, notamment lors de variations de températures et/ou de taux d'hygrométrie.

A cet effet, l'invention propose une plaque de parement, notamment pour la réalisation de cloisons, de doublages et/ou de plafonds, présentant une plaque de base constituée d'une plaque de plâtre avec deux faces opposées.

Selon l'invention, cette plaque de parement présente également un panneau d'épaisseur inférieure à celle de la plaque de base collé sur une face de ladite plaque à l'aide d'un adhésif souple après séchage.

Le panneau collé sur la plaque de base peut être réalisé à partir de divers matériaux. Ses dimensions, en longueur et largeur, sont de préférence moindres que celles de la plaque de base. Il est envisageable d'avoir plusieurs panneaux collés sur une même face de plaque de base.

En ce qui concerne la colle, il a été remarqué que l'utilisation d'un adhésif qui reste souple après son séchage permet d'augmenter de façon surprenante les caractéristiques acoustiques de la plaque de parement, par rapport à l'utilisation d'une colle classique qui durcit au cours de son séchage.

Le panneau utilisé dans une plaque de parement selon l'invention est un panneau dur présentant de préférence une masse surfacique supérieure à 1,5 kg/m². De cette manière, on obtient un meilleur amortissement des ondes sonores. Il peut par exemple s'agir d'un panneau dur de fibres de bois d'une épaisseur comprise entre 2 et 5 mm.

L'adhésif utilisé pour la réalisation d'une plaque de parement selon l'invention présente quant à lui, à l'état sec, avantageusement une grande, voire très grande, élasticité. Ceci favorise un bon amortissement acoustique au niveau de la plaque de parement.

Une forme de réalisation préférée de l'adhésif utilisé présente des caractéristiques techniques qui permettent d'avoir de bonnes performances acoustiques. Ainsi, l'adhésif utilisé est de préférence :
une colle thermofusible, et/ou
une colle présentant une viscosité Brookfield comprise entre 70.000 et 100.000 mPa.s à 150° C, et/ou
une colle présentant une viscosité Brookfield comprise entre 5.000 et 7.500 mPa.s à 190° C, et/ou
une colle avec un point de ramollissement compris entre 100° C et 150° C, et/ou
un adhésif permanent, et/ou
un adhésif contenant du caoutchouc.

Pour améliorer encore les performances acoustiques d'une plaque de parement selon l'invention, il est proposé que l'adhésif soit disposé sous forme de cordons, continus ou discontinus, entre la plaque de base et le panneau. Ces cordons sont par exemple espacés les uns des autres d'au moins 10 cm. Le plan de collage entre la plaque de base et le panneau est quant à lui de préférence un plan de collage épais, dont l'épaisseur est de préférence supérieure à 0,3 mm.

Le panneau de la plaque de parement est par exemple centré sur la plaque de base.

La présente invention concerne également une cloison comportant une ossature sur laquelle est fixée au moins une plaque de parement, et pour laquelle au moins une plaque de parement est une plaque telle que décrite ci-dessus.

Des détails et avantages de la présente invention ressortiront mieux de la description qui suit, faite en référence aux dessins schématiques annexés, sur lesquels :
La figure 1 représente une vue en coupe éclatée d'une cloison réalisée avec des plaques selon l'invention,
La figure 2 montre à échelle réduite une plaque de parement selon l'invention en vue de dessous,
La figure 3 représente en vue de dessus un panneau utilisé pour réaliser une plaque selon l'invention, et
La figure 4 montre un diagramme illustrant en terme d'acoustique le gain de l'utilisation de plaques de parement selon l'invention.

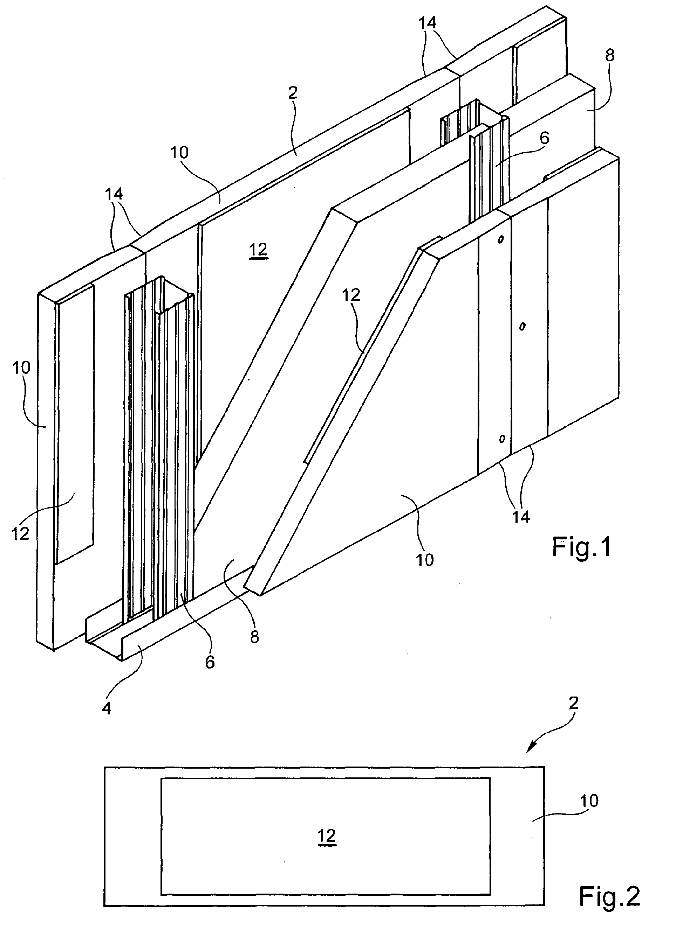

Sur la figure 1, on reconnaît un montage classique d'une cloison. Cette cloison comporte des plaques de parement 2 fixées sur une ossature comportant d'une part un rail 4 fixé au sol et d'autre part des montants verticaux 6. Entre les plaques de parement 2 se trouve une bande de matériau isolant 8. Ce dernier est par exemple un matériau connu sous le nom de laine de verre ou laine de roche. Les plaques de parement 2 sont, de manière classique, vissées sur les montants verticaux 6.

La différence importante ici dans le montage de la cloison représentée est l'utilisation de plaques de parement présentant des performances acoustiques améliorées.

La figure 2 représente à échelle réduite une plaque de parement utilisée pour la réalisation de la cloison représentée à titre d'exemple non limitatif sur la figure 1. Cette plaque de parement 2 comporte d'une part une plaque de base 10 et d'autre part un panneau 12.

La plaque de base 10 est une plaque de parement classique telle celles que l'on utilise pour réaliser des cloisons du type de celles représentées sur la figure 1 (ou dans d'autres applications). Il s'agit ainsi par exemple d'une plaque connue sous le nom de plaque de plâtre. Une telle plaque est une plaque composite comportant une couche de plâtre en sandwich entre deux couches cartonnées. De telles plaques sont couramment utilisées pour la réalisation de cloisons ou de plafonds. Le plus souvent, ces plaques sont rectangulaires et présentent deux bords amincis permettant de réaliser un joint de finition sans former de surépaisseur par rapport au plan de la plaque. Ces bords amincis 14 sont représentés sur la figure 1 mais n'apparaissent pas sur la figure 2. En effet, ces bords amincis se trouvent sur la face cachée de la vue de la figure 2.

Le panneau 12 de la figure 2 est un panneau dur en fibres de bois. Son épaisseur est de l'ordre de 3 mm. Ce panneau est composé essentiellement de fibres de bois, d'eau (environ 7%) et de paraffine (environ 0,3%). Sa densité est proche de 1. Ce panneau présente donc une masse surfacique d'environ 3 kg/m². A titre d'exemple illustratif, le panneau 12 peut être un panneau commercialisé par la Société Tarnaise Des Panneaux SAS sous la dénomination ISOGIL.

Comme on peut le remarquer sur les figures 1 et 2, la largeur et la longueur du panneau 12 sont inférieures à la largeur et à la longueur respectivement de la plaque de base 10. On souhaite ici éviter que le panneau 12 se trouve dans les zones de la plaque de parement servant à la fixation de celle-ci sur une ossature. A titre purement illustratif, on peut prévoir une plaque de base de 900 mm x 2800 mm et un panneau correspondant de 760 mm x 2100 mm.

Lorsque le panneau 12 est collé sur une plaque de base 10 à bord aminci, le panneau 12 se trouve sur la face de la plaque de base ne présentant pas de bords amincis. La face portant les bords amincis étant la face visible lorsque la plaque de parement est posée, le panneau 12 se trouve donc au dos de la plaque de base 10. Le panneau 12 est centré au dos de cette plaque.

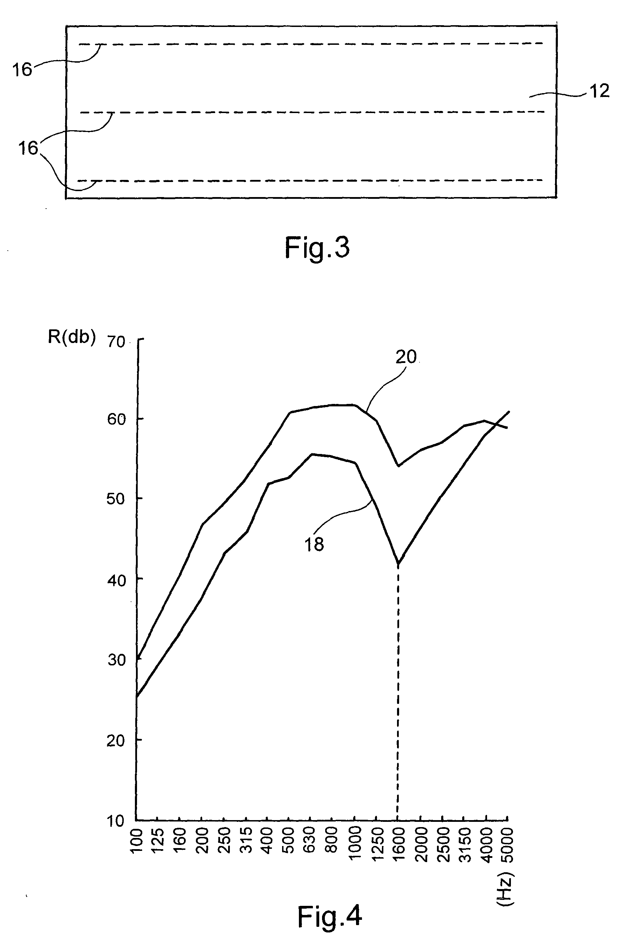

La figure 3 représente un panneau 12 sur lequel sont déposés des cordons de colle 16. Ces derniers s'étendent longitudinalement sur le panneau et sont régulièrement espacés. Dans la forme de réalisation représentée aux dessins, la largeur du panneau est de 760 mm et trois cordons de colle 16 sont régulièrement répartis sur cette largeur. De préférence le nombre de cordons sera limité, à quatre cordons maximum par exemple.

L'orientation des cordons de colle 16 par rapport au panneau 12 importe peu. On peut également avoir des cordons de colle non rectilignes. On obtient par exemple ces cordons de colle 16 en passant le panneau 12 dans une encolleuse à filets. Une fois encollé, le panneau 12 est assemblé à une plaque de base 10. Un gabarit permet de réaliser un bon centrage du panneau 12 par rapport à la plaque de base 10.

La colle utilisée est par exemple une colle thermofusible. Après séchage, cette colle reste souple. De préférence, sa dureté, après séchage, est inférieure à 50° Shore A et elle présente une très grande élasticité. A titre d'exemple illustratif et non limitatif, la colle utilisée présente les caractéristiques suivantes :

| | | |
|---|---|---|
| Viscosité Brookfield RVT : | 150°C | environ 85000 mPa.s |
| | 160°C | environ 39800 mPa.s |
| | 170°C | environ 18900 mPa.s |
| | 180°C | environ 12200 mPa.s |
| | 190°C | environ 6000 mPa.s |

La mesure de viscosité est par exemple effectuée selon la norme NF T 76-102. Le point de ramollissement (Mettler.) est par exemple compris entre 125°C et 130°C. Le temps ouvert conventionnel de cette colle est tel que l'on a un adhésif permanent. La colle utilisée est de préférence une colle à tack élevé.

A titre d'exemple illustratif, la colle utilisée est une colle de la Société National Starch & Chemical S.A.S. sous la dénomination DURO-TAK H203/A. D'après la notice technique de cette colle, cette dernière est destinée à l'enduction d'étiquettes, de moquettes et de tissus. Elle peut être utilisée aussi, d'après cette notice, pour l'adhésivage de supports divers, après avis technique du fabricant. Elle est notamment destinée à être utilisée sur des supports en métal, en verre ou en matière synthétique.

Avec un tel adhésif, il est proposé d'utiliser 35 g de colle pour le collage d'un panneau 12 tel que décrit plus haut.

Bien entendu, d'autres adhésifs souples après séchage peuvent être utilisés.

L'utilisation d'une telle plaque de parement 2 pour la réalisation d'une cloison comme montré sur la figure 1 permet d'améliorer très sensiblement les caractéristiques acoustiques de la cloison de la figure 1. Sur la figure 4, une première ligne illustre les performances acoustiques d'une cloison telle celle de la figure 1 réalisée avec des plaques de parement classiques c'est-à-dire des plaques de base sans panneau 12. Cette courbe 18 représente en fonction de la fréquence (en Herz) l'indice d'affaiblissement acoustique pondéré R (en déciBel) de cette cloison. Le fait de rajouter sur les plaques de parement un panneau dur de fibres de bois d'une épaisseur de l'ordre de 3 mm à l'aide d'une colle souple après séchage permet d'améliorer sensiblement les performances acoustiques de la cloison. Le fait de rajouter un panneau sur la plaque de base favorise de façon connue les performances acoustiques d'une cloison. Ici toutefois l'utilisation d'une colle souple une fois séchée permet, de façon surprenante, d'augmenter encore les performances acoustiques de la cloison.

Pour améliorer encore les performances acoustiques, il est recommandé de déposer la colle sous forme de cordons. Il est à noter que la colle utilisée ici a de préférence la caractéristique de se solidifier très rapidement après dépose sur le panneau dur. De la sorte, elle ne s'écrase pas totalement et ceci permet de former entre le panneau et la plaque de base un mince film d'air qui favorise lui aussi les performances acoustiques de la plaque de parement. On crée de la sorte un plan de collage épais de plusieurs dixièmes de millimètres.

Dans un montage tel celui de la figure 1, en utilisant comme plaques de base des plaques de plâtre d'une épaisseur de 25 mm, on a un montage présentant un indice d'affaiblissement acoustique pondéré R_{A} = 45 dB. Toujours avec le même montage mais, comme représenté sur la figure 1, en utilisant des plaques de parement selon l'invention, on obtient un indice R_{A} = 53 dB.

On a donc un gain de + 8 dB. On estime que dans cette amélioration des performances acoustiques, une augmentation de 5 dB est due uniquement aux choix astucieux de la colle et au procédé de collage utilisant des cordons. Une courbe 20 illustre les performances du montage de la figure 1 avec des plaques de parement selon l'invention. On remarque notamment sur la figure 4 que le creux observé aux alentours de 1600 Hz avec des plaques de parement de l'art antérieur est très sensiblement atténué avec des plaques de parement selon l'invention.

Comme il ressort de la description ci-dessus, l'invention permet d'améliorer très sensiblement les performances acoustiques d'une paroi. Cette amélioration est obtenue avec un surcoût de production limité. En outre, pour la personne réalisant des cloisons, le mode opératoire est inchangé. Seules quelques modifications de mise en oeuvre doivent être envisagées lorsqu'une découpe d'une plaque de parement nécessite la découpe du panneau correspondant.

Le choix de la colle est aussi important pour la stabilité de la forme de la cloison réalisée. En utilisant une colle polyuréthane, du type de celles utilisées pour réaliser le collage d'une couche de polystyrène expansé sur une plaque de plâtre, pour coller un panneau dur, par exemple un panneau de fibres de bois, sur une plaque de plâtre, on a remarqué d'importantes déformations de la plaque lors de changements de températures et/ou de taux d'humidité. Une telle colle ne peut donc pas être utilisée ici.

La présente invention ne se limite pas à la forme de réalisation préférentielle décrite ci-dessus à titre d'exemple non limitatif. Elle concerne également toutes les variantes de réalisation à la portée de l'homme du métier dans le cadre des revendications ci-après.

Ainsi, d'autres panneaux que des panneaux à base de fibres de bois peuvent être utilisés. D'autres types de matériaux permettent de réaliser également un amortissement acoustique.

La description ci-dessus concerne un mode de réalisation préférentiel dans lequel un seul panneau est collé sur une face d'une plaque de base. Il est bien entendu également envisageable de coller sur une plaque de base deux ou plusieurs panneaux, qui seront alors bien entendu de dimensions moindres.

L'invention ne concerne pas uniquement des plaques de plâtre mais peut être mise en oeuvre avec d'autres plaques de parement, en bois par exemple.

De nombreux types de colle ou autres adhésifs peuvent être utilisés pour la mise en oeuvre de l'invention. Il importe ici d'avoir une certaine souplesse entre la plaque de base et le panneau collé sur celle-ci.

## Revendications

1. Plaque de parement, notamment pour la réalisation de cloisons, de doublages et/ou de plafonds, présentant une plaque de base (10) constituée d'une plaque de plâtre avec deux faces opposées,
**caractérisée en ce qu'**elle présente également un panneau (12) d'épaisseur inférieure à celle de la plaque de base (10) collé sur une face de ladite plaque (10) à l'aide d'un adhésif souple après séchage.

2. Plaque de parement selon la revendication 1, **caractérisée en ce que** le panneau (12) est un panneau dur présentant une masse surfacique supérieure à 1,5 kg/m².

3. Plaque de parement selon l'une des revendications 1 ou 2, **caractérisée en ce que** le panneau (12) est un panneau dur de fibres de bois d'une épaisseur comprise entre 2 et 5 mm.

4. Plaque de parement selon l'une des revendications 1 à 3, **caractérisée en ce que** l'adhésif utilisé présente, à l'état sec, une grande élasticité.

5. Plaque de parement selon l'une des revendications 1 à 4, **caractérisée en ce que** l'adhésif utilisé est une colle thermofusible.

6. Plaque de parement selon la revendication 5, **caractérisée en ce que** l'adhésif utilisé présente une viscosité Brookfield comprise entre 70.000 et 100.000 mPa.s à 150° C, une viscosité Brookfield comprise entre 5.000 et 7.500 mPa.s à 190° C, et **en ce que** son point de ramollissement est compris entre 100° C et 150°C.

7. Plaque de parement selon l'une des revendications 1 à 6, **caractérisée en ce que** l'adhésif utilisé est un adhésif permanent.

8. Plaque de parement selon l'une des revendications 1 à 7, **caractérisée en ce que** l'adhésif utilisé contient du caoutchouc.

9. Plaque de parement selon l'une des revendications 1 à 8, **caractérisée en ce que** la dureté de la colle après séchage est inférieure à 50° Shore A.

10. Plaque de parement selon l'une des revendications 1 à 9, **caractérisée en ce que** l'adhésif est disposé sous forme de cordons (16), continus ou discontinus, entre la plaque de base (10) et le panneau (12).

11. Plaque de parement selon la revendication 10, **caractérisée en ce que** les cordons (16) sont espacés les uns des autres d'au moins 10 cm.

12. Plaque de parement selon l'une des revendications 1 à 11, **caractérisée en ce que** le plan de collage entre la plaque de base (10) et le panneau (12) présente une épaisseur supérieure à 0,3 mm.

13. Plaque de parement selon l'une des revendications 1 à 12, **caractérisée en ce que** les largeur et longueur de la plaque de base (10) sont supérieures chacune aux largeur et longueur respectives du panneau (12) collé sur la plaque de base (10).

14. Plaque de parement selon la revendication 13, **caractérisée en ce que** le panneau (12) est centré sur la plaque de base (10).

15. Cloison comportant une ossature (4, 6) sur laquelle est fixée au moins une plaque de parement (2), **caractérisée en ce qu'**au moins une plaque de parement (2) est une plaque selon l'une des revendications 1 à 14.
